# EUROPEAN PATENT APPLICATION

(11) **EP 3 272 405 A2**
(43) Date of publication of application: **24.01.2018**
(21) Application number: 17182118.4
(22) Date of filing: 19.07.2017
(51) Int. Cl.: B01D 17/02, C02F 1/40, F04B 39/16

(54) **FILTER APPARATUS**

(30) Priority: 21.07.2016 GB 201612675; 28.12.2016 GB 201622309
(71) Applicant: Condensate Systems Limited, Lichfield Staffordshire WS12 3XU (GB)
(72) Inventor: Amphlett, Michael, Sandbach, Cheshire CW11 1PB (GB); Turner, Richard, Burntwood, Staffordshire WS7 0HE (GB)
(74) Representative: Swindell & Pearson Limited

(57) **Abstract**

A filter apparatus (2) comprising a filter body (4) within which is located a filter cartridge (6). The filter body (4) comprising a filter inlet (14) and a filter outlet (22), the filter cartridge (6) defines a cartridge volume (8) suitable for containing a filter media (60, 62, 64, 66) and comprises a cartridge inlet (30) and a cartridge outlet (46), in which the filter inlet (14) is in fluid communication with the cartridge inlet (30). The cartridge inlet (30) is in fluid communication with the cartridge outlet (46) via the cartridge volume (8), and the cartridge outlet (46) is in fluid communication with the filter outlet (22) characterised in that the filter inlet (14) comprises a conduit engagement means (32), and a filter inlet passage (34) along which fluid may pass. The cartridge inlet (30) comprises a deflector plate (36) and at least one cartridge inlet passage (42), the filter inlet (14) and cartridge inlet (30) in combination define a cartridge inlet volume located at least partially between the mouth of the filter inlet passage (34) remote from the conduit engagement means (32) and the deflector plate (36), the filter inlet passage (36) is so configured that fluid exiting the mouth of the filter inlet passage (32) into the cartridge inlet volume has a direction of travel toward the deflector plate (36), and the or each cartridge inlet passage (42) extends between the cartridge inlet volume and the cartridge volume (8).

## Description

This invention relates to filter apparatus, in particular, to apparatus for filtering oil and / or hydrocarbons from water.

It is known that in certain processes waste liquid comprising a mixture of water and oil and / or hydrocarbons, hereafter described collectively as "water oil mixtures", is produced. For example, compressed air systems generate condensate in their operation. The condensate is a mixture of water that has condensed out of the air as the compressed air system operates, and oil originating from the lubrication, sealing and cooling of the apparatus of the compressed air system. The condensate is removed from the compressed air apparatus, so that it does not damage the compressed air system or processes that use the compressed air, and must be disposed of.

The condensate can in some circumstances be drained out of a non-pressurised portion (that is a portion that is at atmospheric pressure) of the compressed air apparatus under gravity. In other circumstances, it is removed from a pressurised portion (that is a portion that is at above atmospheric pressure) of the compressed air apparatus. When this occurs, the condensate may be liquid only or a mixture of liquid and compressed air and may include aerosolized and or entrained water oil mixture. The pressure of the condensate when it leaves the compressed air apparatus may be may be substantially above atmospheric pressure, for example pressures of up to 180 p.s.i. (1241 kPa) are not untypical.

The condensate from a compressed air system is a mixture of water and oil typically at a water: oil ratio of 99 : 1. The actual ratio will vary depending on various factors, but the actual ratio does not affect the present invention. Disposal costs for water oil mixtures are generally dependent on the volume of liquid disposed of. To try to minimise the volume of liquid that needs to be disposed of, and hence to minimise the cost of such disposal, it is known to filter water oil mixtures to separate a portion of the water from the oil so that the separated substantially oil free water can be disposed of via a normal drainage system without any environmental harm. The reduced volume of oil and any remaining water can then be appropriately disposed of or treated.

Dedicated filter apparatus to perform such filtration are known. Such filter apparatus are generally comprised of a filter media contained within a containment means through which a water oil mixture may flow. The filter media is such that the oil is absorbed into the filter media and / or adsorbed on to the surface of the filter media. If an appropriate filter media is used, the liquid leaving the filter has sufficiently low levels of oil remaining within it that the liquid can be disposed of without further treatment, for example by being discharged into a foul water drainage system.

According to a first aspect of the present invention there is provided an improved filter apparatus comprising a filter body within which is located a filter cartridge, the filter body comprising a filter inlet and a filter outlet, the filter cartridge defines a cartridge volume suitable for containing a filter media and comprises a cartridge inlet and a cartridge outlet, in which the filter inlet is in fluid communication with the cartridge inlet, the cartridge inlet is in fluid communication with the cartridge outlet via the cartridge volume, and the cartridge outlet is in fluid communication with the filter outlet characterised in that
the filter inlet comprises a conduit engagement means, and a filter inlet passage along which fluid may pass,
the cartridge inlet comprises a deflector plate and at least one cartridge inlet passage,
the filter inlet and cartridge inlet in combination define a cartridge inlet volume located at least partially between the mouth of the filter inlet passage remote from the conduit engagement means and the deflector plate,
the filter inlet passage is so configured that fluid exiting the mouth of the filter inlet passage into the cartridge inlet volume has a direction of travel toward the deflector plate, and
the or each cartridge inlet passage extends between the cartridge inlet volume and the cartridge volume.

It is preferred that the filter cartridge is comprised of first and second end walls and at least one side wall extending between the first and second end walls. The first and second end walls and the or all of the side walls combine to define the cartridge volume. The cartridge volume is, when the filter is in use, wholly or substantially filled with filter media. It is preferred that at least the first and second end walls of the filter cartridge are rigid or at least not one or both of flexible and deformable. That is that the first and second end walls are self-supporting. The side wall or walls of the filter cartridge are again preferably rigid or at least not one or both of flexible and deformable. That is that the first and second end walls are self-supporting. It is preferred that the walls of the filter cartridge are formed from an impermeable material.

The first end wall of the filter cartridge comprises the cartridge inlet and at least one vent hole passing through the first end wall. Preferably there are more than one vent holes passing through the first end wall.

In some preferred embodiments of the present invention the first end wall of the filter cartridge is provided with a plurality of vent holes. In some preferred embodiments of the present invention the plurality of vent holes are grouped into at least two groups, each group of vent holes being arranged in a linear fashion across the surface of the first end wall. In some other embodiments of the present invention each group of vent holes is arranged along a curve extending across the surface of the first end wall. In some embodiments of the present invention the line (whether linear or curved) of at least one group of vent holes extends from a location near the cartridge inlet to a location near the edge of the first wall.

In some preferred embodiments of the present invention the cartridge inlet is located substantially at or near the geometric centre of the first end wall. This arrangement is beneficial because it leads to an even distribution of the flow of the liquid through the filter media when the apparatus of the present invention is in use.

In some preferred embodiments of the present invention the first end wall is substantially circular. When the first end wall is substantially circular it is preferred that the first end wall is provided with a plurality of vent holes. It is further preferred that the plurality of vent holes are grouped into at least two groups, the vent holes of each group are arranged in a linear fashion extending across the surface of the first end wall and each line of vent holes is orientated to extend from adjacent the cartridge inlet to adjacent the edge of the first wall. When the cartridge inlet is located substantially at or near the centre of the circular first end wall it is preferred that the line or lines of vent holes extend substantially radially from adjacent the cartridge inlet to adjacent the edge of the first wall.

In some preferred embodiments of the present invention the first end wall is substantially circular, the first end wall is provided with a plurality of vent holes, the vent holes are grouped into two, three or four groups, the vent holes of each group are arranged along a straight line, each straight line of vent holes is orientated to extend substantially radially from adjacent the cartridge inlet to adjacent the edge of the first wall, and the straight lines of vent holes are substantially evenly spaced from each other. For example, for an embodiment of the present invention where there are two groups of vent holes the straight lines of vents are separated by around 180°, where there are three groups of vent holes the straight lines of vent holes are separated by around 120°, and where there are four groups of vent holes the straight lines of vent holes are separated by around 90°.

In embodiments including groups of vent holes, the number of vent holes in each group may be the same or different. Preferably each group comprises 2, 3, 4, 5, 6, 7, 8, 9 or 10 vent holes.

In some preferred embodiments of the present invention the or each cartridge inlet passage is so orientated that fluid passing out of the cartridge inlet passage into the cartridge volume has a direction of travel not directly towards the or any vent hole passing through the first end wall.

In some preferred embodiments of the present invention the cartridge inlet is provided with at least two cartridge inlet passages. It is preferred that the at least two inlet passages are located and orientated so that the direction of travel of fluid passing out of the cartridge inlet passage into the cartridge volume for each inlet passage are, in a plane parallel to the first end wall, substantially evenly spaced from each other. For example, for an embodiment of the present invention where there are two cartridge inlet passages the cartridge inlet passages are separated by around 180°, where there are three cartridge inlet passages the cartridge inlet passages are separated by around 120°, and where there are four cartridge inlet passages the cartridge inlet passages are separated by around 90°.

In some embodiments of the present invention, the number of cartridge inlet passages is the same as the number of groups of vent holes in the first end wall. In other embodiments of the present invention, the number of cartridge inlet passages is different to the number of groups of vent holes in the first end wall.

In some preferred embodiments of the present invention the first end wall is substantially circular, the first end wall is provided with a plurality of vent holes, the vent holes are grouped into two, three or four groups, the vent holes of each group are arranged in a linear fashion across the first end wall, each line of vent holes is orientated to extend substantially radially from adjacent the cartridge inlet to adjacent the edge of the first wall, the lines of vent holes are substantially evenly spaced from each other, the cartridge inlet is provided with the same number of cartridge inlet passages as there are groups of vent holes, the inlet passages are located and orientated so that the directions of travel of fluid passing out of the cartridge inlet passage into the cartridge volume for each inlet passage are, in a plane parallel to the first end wall, substantially evenly spaced from each other, and the directions of travel of fluid passing out of the cartridge inlet passage into the cartridge volume for each inlet passage roughly bisect the spaces between the lines of vent holes in the first end wall.

The filter apparatus according to the present invention is advantageous because when the water oil mixture is flowing from its source, for example a compressed air apparatus, it may be a pressurised liquid, a pressurised gas with entrained or aerosolized liquid, or a pressurised liquid with entrained gas. The orientation of the filter inlet passage is such that the fluid flowing from the filter inlet passage into the cartridge inlet volume will strike the deflection plate. This will cause the fluid to splash around within the cartridge inlet volume and lose some of its kinetic energy. The fluid will ultimately flow out of the cartridge inlet volume via the or each cartridge inlet passage. The fluid is likely to still be pressurised and possessed of significant amounts of kinetic energy when it enters the or each cartridge inlet passage but the kinetic energy of the fluid will be substantially reduced relative to when it entered the filter apparatus. This loss of kinetic energy has the effect that the fluid entering the filter cartridge volume will not have sufficient energy to damage or displace filter media within the filter cartridge volume. It will further have the effect that entrained or aerosolized liquid within a gas stream is likely to dis-entrain or condense respectively, and gas within a liquid stream to dis-entrain.

The cartridge inlet volume may be provided with one or more baffles or similar to increase the loss of kinetic energy of the fluid entering the filter cartridge volume.

The presence of the or each vent hole in the first end wall of the filter cartridge has the effect that there cannot be a build-up of pressure to above atmospheric pressure within the filter cartridge and as a result the water oil mixture will not be forced through the filter media as a result of above atmospheric pressures in the filter cartridge. This is important because the filter media are more effective at removing oil / hydrocarbons from the liquid being filtered when the rate of flow of the liquid through the filter media is low rather than high.

The relative positioning of the vent holes in the first end wall of the filter cartridge and the or each cartridge inlet passages are preferably such that that there is little or no likelihood of pressurised fluid flowing directly from the or a cartridge inlet passage to a vent hole and exiting the filter cartridge volume via that vent hole. Rather, the position and orientation of the cartridge inlet passages so that they do not direct the fluid flow directly toward a vent hole has the effect that fluid flow from a cartridge inlet passage to a vent hole is likely to be indirect and most likely to involve the fluid impacting on one or more side or end walls of the filter cartridge and or elements of the filter media. Such impacts will further reduce the kinetic energy of the fluid.

In some preferred embodiments the portion of the cartridge inlet within the cartridge volume is at least partially surrounded by a labyrinthine material. A labyrinthine material is one in which fluid may pass through the material but will need to travel a labyrinthine or non-linear path as it passes through that material. A preferred labyrinthine material is reticulated foam. Other labyrinthine materials fall within the scope of the present invention. Preferably the cartridge inlet extends into a void formed wholly or in part by the labyrinthine material. Preferably the labyrinthine material is so configured that any fluid exiting a cartridge inlet passage passes directly into the labyrinthine material.

In some preferred embodiments where the cartridge inlet is at least partially surrounded by a labyrinthine material, that labyrinthine material is configured to extend from the cartridge inlet to the or each side wall of the cartridge. In some preferred embodiments, the labyrinthine material is so configured that it extends from the cartridge inlet and at least overlies each vent hole in the first end wall of the filter cartridge.

In some preferred embodiments where the cartridge inlet is at least partially surrounded by a labyrinthine material, a barrier or sheet of impermeable material extends from the cartridge inlet or first end wall adjacent the cartridge inlet towards, but not all the way to, the or each side wall of the cartridge, the barrier or sheet of impermeable material is preferably spaced from the first end wall of the cartridge and generally within 10 degrees of parallel with the first end wall of the cartridge, within 5 degrees of parallel with the first end wall of the cartridge, or approximately parallel to the first end wall of the cartridge, there is labyrinthine material between the barrier or sheet of impermeable material and the first end wall of the cartridge, and the barrier or sheet of impermeable material extends from the cartridge inlet or first end wall of the cartridge at a position between the or each mouth of the cartridge inlet passages and the vent or vents in the first end wall of the cartridge. Preferably, the barrier or sheet of impermeable material extends from a position on the cartridge inlet at a position between the or each mouth of the cartridge inlet passages and the first end wall of the cartridge.

Preferably the labyrinthine material is so configured that the labyrinthine material also overlies the mouth of each cartridge inlet passage. Preferably, the sheet of impermeable material is in a substantially gas tight contact with the cartridge inlet or first end wall of the cartridge.

In some preferred embodiments the barrier or sheet of impermeable material extends to a position between one quarter and three quarters of the distance between the cartridge inlet and the or each side wall of the cartridge.

In some preferred embodiments the barrier or sheet of impermeable material extends sufficiently far from the cartridge inlet that, in a direction substantially perpendicular to the first end wall of the cartridge, the barrier or sheet of impermeable material overlies each vent hole in the first end wall, but is spaced therefrom by the labyrinthine material.

The barrier or sheet of impermeable material is preferably made of plastics. The sheet of impermeable material may be attached to the cartridge inlet or first end wall of the cartridge. The attachment may be made by a suitable adhesive.

The advantage of these embodiments of the present invention is that the pressurised air / water / oil mix entering the cartridge volume has to pass through the labyrinthine material for the air to exit the cartridge via the vents in the first end wall of the cartridge. The passage of the air / water / oil mix through the labyrinthine material will lead to any water and / or oil entrained in the air impacting in the structure of the labyrinthine material and becoming dis-entrained with the result that the air exiting the cartridge is free or acceptably free from entrained water and / or oil. This is particularly so in the embodiments including the sheet of impermeable material because the minimum thickness of labyrinthine material that the air / water / oil mix has to pass through before a vent in the first end wall is reached is higher when the sheet of impermeable material is present than when it is not.

It is preferred that the filter body of the filter apparatus is configured and dimensioned to allow a filter cartridge as described herein to be readily placed into and taken out of the filter body. It is preferred that the filter body is comprised of a filter body base and a filter body lid in which the filter body base is a vessel comprising a base, one or more side walls and an open mouth remote from the base, and the filter body lid is adapted to reversibly close the mouth of the filter body base. Preferably, the filter body base and lid are adapted to releasably engage with each other. A seal means may be provided between the filter body base and the filter body lid.

The filter body base and filter body lid may be configured so that they may be releasably engaged with each other only when the lid and base are orientated or positioned relative to each other in a predetermined orientation or position.

The engagement of the filter body base and filter body lid may be by any appropriate engagement mechanism. A non-exhaustive and non-limiting list of examples of such mechanisms are a screw thread or a quick seal clamp.

It is preferred that the filter body base, filter body lid and the filter cartridge adapted for use in the filter apparatus are so dimensioned and configured that, when the filter cartridge is placed within the filter body base, the filter cartridge has to be orientated with the first end wall of the filter cartridge near or adjacent to the position in which the filter body lid sits when it is engaged with the filter body base before the filter body lid may be engaged with the filter body base.

It is further preferred that the filter body lid further comprises the filter inlet and the filter body base further comprises the filter outlet. In some embodiments of the present invention, the filter body lid further comprises at least one vent hole.

It is preferred that the filter inlet is comprised of a conduit engagement means, and the filter inlet passage. The conduit engagement means is adapted to engage with a conduit which may extend from a source of the water oil mixture to the filter apparatus. The conduit engagement means may be any known design of engagement means. It is preferable that the conduit can be reversibly engaged with conduit engagement means via a suitable connection means. For example the conduit engagement means of the filter inlet can be configured to be the male or female part of a male / female connection system.

It is further preferred that the filter inlet is located on the filter body lid in a position that causes the filter inlet to be adjacent the cartridge inlet when the filter body lid is engaged with the filter body base. It is most preferred that one or both of the filter inlet and cartridge inlet are so configured that when the filter body lid is engaged with the filter body base the cartridge inlet volume is defined by or between the filter inlet and cartridge inlet.

It is preferred that the filter body lid is provided with at least one vent hole passing through the filter body lid. It is preferred that the or each vent hole in the filter body lid is located in a position that is not adjacent to a vent hole in the first end wall of the filter cartridge when the filter body lid is engaged with the filter body base.

It is preferred that the filter body base, filter body lid and the filter cartridge adapted for use in the filter apparatus are so dimensioned and configured that when the filter cartridge is located within the filter body base and the filter body lid is engaged with the filter body base, there is a void between the first end wall of the filter cartridge and the filter body lid. It is preferred that that void is reversibly filled with a labyrinthine material that causes any fluid travelling from a vent in the first end wall of the filter cartridge to a vent in the filter body lid to have to travel a labyrinthine path. A preferred labyrinthine material is reticulated foam. Alternative labyrinthine materials may be loosely packed fibres or granular with grain shapes and sizes that will not allow close packing of the grains.

It is preferred that the labyrinthine material is of a non-absorbing and non-adsorbing nature so that any water oil mixture or liquid that is deposited on the structure of the labyrinthine material can flow out of the labyrinthine material under the influence of gravity. It is preferred that the face of the first end wall of the filter cartridge remote from the filter cartridge volume is so configured that any water oil mixture or liquid flowing out of the labyrinthine material onto the first end wall of the filter cartridge is caused to flow into the filter cartridge volume via one or more of the vent holes.

In some embodiments of the present invention there is provided a means for retaining the labyrinthine material in position. One possible means is mesh or intermediate perforated wall.

The labyrinthine path created by the labyrinthine material between the first end wall of the filter cartridge and the filter body lid has the effect that any aerosol or air entrained liquid in gas passing out of the filter cartridge via the vent holes will have to pass along the labyrinthine path and the aerosol or gas entrained liquid is likely to be deposited on the structure of the labyrinthine material.

It is most preferred that the second end wall of the filter cartridge comprises the cartridge outlet. It is most preferred that the cartridge outlet comprises at least two drain holes in the second end wall. The or each drain hole is preferably of a size that is large enough to allow the free flow of water through the hole under the force of gravity.

It is preferred that when the cartridge outlet comprises a plurality of drain holes in the second end wall those drain holes are substantially evenly spaced across the second end wall. In other preferred embodiments, the plurality of drain holes are spaced from each other but not at an even spacing.

In some preferred embodiments of the present invention the plurality of drain holes are grouped into at least two groups of at least two drain holes per group. In such embodiments, each group of holes are arranged along a linear or curved line extending across the surface of the second end wall. In some embodiments of the present invention each group of drain holes is arranged along a straight line extending across the surface of the second end wall.

In some preferred embodiments of the present invention the second end wall of the filter cartridge is substantially circular. When the second end wall is substantially circular it is preferred that the cartridge outlet is comprised of a plurality of drain holes. It is further preferred that the plurality of drain holes are grouped into at least two groups of at least two drain holes per group, the drain holes of each group are arranged in a straight line extending across the surface of the second end wall. Preferably each straight line of drain holes extends substantially radially across the surface of the second end wall.

In some preferred embodiments of the present invention the second end wall is substantially circular, the second end wall is provided with a plurality of drain holes, the drain holes are grouped into two, three or four groups, the drain holes of each group are arranged along a straight line, each straight line of drain holes is orientated to extend substantially radially across the surface of the second end wall, and the straight lines of drain holes are substantially evenly spaced from each other. For example, for an embodiment of the present invention where there are two groups of drain holes the straight lines of drain holes are separated by around 180°, where there are three groups of drain holes the straight lines of drain holes are separated by around 120°, where there are four groups of drain holes the straight lines of drain holes are separated by around 90°, where there are five groups of drain holes the straight lines of drain holes are separated by around 72°, and where there are six groups of drain holes the straight lines of drain holes are separated by around 60°.

The number of drain holes in each group may be the same or different. Preferably each group comprises 2, 3, 4, 5, 6, 7, 8, 9 or 10 drain holes.

An advantage of the cartridge outlet comprising at least two drain holes in the second end wall is that it results in the flow of liquid through the filter media within the filter cartridge being considerably more evenly distributed throughout the whole of the filter media than is experienced when only a single outlet is present. Further, it minimises any dead or stagnant zones in the filter media where there is no flow of liquid. This greater evenness of flow and / or minimisation of stagnant zones within the filter media has the effect that it maximises the use of the filter media with the result that the filter media needs to be replaced less frequently. Less frequent media replacement has economic and environmental benefits relative to more frequent media replacement.

A further benefit of the cartridge outlet comprising at least two drain holes in the second end wall is that if, for some reason one of the drain holes becomes blocked, then as long as all of the drain holes are not blocked the filter cartridge can continue to function even if that functioning is not as efficient as when all the drain holes allow the passage of water.

It is preferred that the filter body base, filter body lid and the filter cartridge adapted for use in the filter apparatus are so dimensioned and configured that when the filter cartridge is placed within the filter body base and the filter body lid engaged with the filter body base, the second end wall of the filter cartridge is adjacent at least a portion of the base of the filter body base. Preferably one or both of the second end wall of the filter cartridge and base of the filter body base are provided with one or more means to prevent the base of the filter body base and the second end wall of the filter cartridge from contacting each other other than in predetermined locations. These means have the effect that there is a gap between most of the base of the filter body base and the second end wall of the filter cartridge through which water exiting the filter cartridge may flow. The size of the gap that is required can be readily calculated by a person skilled in the art once it is known what flow of water oil mix is expected to pass into the filter apparatus and the expected flow rate of liquid through the filter media.

It is preferred that the filter body base, filter body lid and the filter cartridge adapted for use in the filter apparatus are so dimensioned and configured that when the filter cartridge is placed within the filter body base and the filter body lid engaged with the filter body base, the or each side wall of the filter cartridge is adjacent at least a portion of the or a side wall of the filter body base. One or both of the or each side wall of the filter cartridge and or the filter body base may be provided with one or more means to prevent the or each side wall of the filter body base and the filter cartridge from contacting each other. These means have the effect that there is a gap between the or each side wall of the filter body base and the or each side wall of the filter cartridge through which water may flow. The size of the gap that is required can be readily calculated by a person skilled in the art once it is known what flow of water oil mix is expected to pass into the filter apparatus and the expected flow rate of liquid through the filter media.

In alternative preferred embodiments of the present invention the or each of the base of the filter body base and the second end wall of the filter cartridge are so configured that they interact with each other and that interaction causes the filter cartridge to be located at a predetermined location and or orientation relative to the filter body base. The interaction may include one or more male / female elements integral with the base of the filter body base and the second end wall of the filter cartridge or the second end wall of the filter cartridge and the base of the filter body base respectively.

It is preferred that the filter body base, filter body lid and the filter cartridge adapted for use in the filter apparatus are so dimensioned and configured that when the filter cartridge is placed within the filter body base and the filter body lid engaged with the filter body base, the filter cartridge has a predetermined orientation relative to the filter body base and filter body lid.

In some preferred embodiments of the present invention the base of the filter body base comprises at least one projection where the or each projection projects from the base of the filter body base towards the filter cartridge, and the second end wall of the filter cartridge further comprises recesses corresponding in number, location and shape to the projections so that each projection may loosely fit within a corresponding recess.

In some preferred embodiments of the present invention, the or each projection has a cross-section, in the plane perpendicular to their direction of projection, that permits the entry of the projection into the corresponding recess only when the filter cartridge has a predetermined orientation relative to the filter body base.

In some embodiments of the present invention, the or at least one projection is located on the base of the filter body base at a position that is asymmetric relative to the or each of the side walls of the filter body base or is of a shape that is asymmetric relative to the or each of the side walls of the filter body base. This has the effect that the or each asymmetrically located or asymmetrical projection can only enter the recess in the second end wall of the filter cartridge corresponding to the projection when the filter cartridge is in a predetermined orientation.

The use of the projections in the fashion above described can also ensure that only a filter cartridge of a particular configuration can be used in a given filter body base. This is advantageous because it may be the case that water oil mixtures from different sources are best filtered with different filter media or different filter media configurations. Filter apparatus according to the present invention are generally dedicated to the treatment of water oil mixtures from one source only and thus the filter media can be selected to be optimal for the water oil mixture from that source. Different filter apparatus according to the present invention may have different configurations of projections between the base of the filter body base and the second end wall of the filter cartridge corresponding to the intended use of the filter apparatus.

Alternatively or additionally, similar arrangements of projections and recesses may be incorporated in the side walls of the filter body base and the side wall or walls of the filter cartridge for similar purposes as described above.

Alternatively or additionally similar arrangements of projections and recesses may be incorporated in the lid of the filter body base and the first end wall of the filter cartridge for similar purposes as described above.

In one preferred embodiment of the present invention the or a side wall of the filter body base comprises the filter outlet of the filter apparatus. The filter outlet of the filter apparatus is preferably comprised of a filter outlet passage extending from the volume defined by the filter body base and filter body lid to the face of the side wall remote from that volume, and a conduit engagement means. The conduit engagement means is preferably adapted to engage with a conduit which may extend from the filter apparatus to a place for disposal of, secondary treatment of, or storage of water leaving the filter apparatus.

The conduit engagement means may be any known design of engagement means. It is preferable that the conduit can be reversibly engaged with conduit engagement means via a suitable connection means. For example the conduit engagement means of the filter inlet can be configured to be the male or female part of a male / female connection system. It is preferred that the conduit engagement means is the female part of a male / female connection system and that the conduit engagement means extends into the volume defined by the filter body base and filter body lid.

In embodiments of the present invention where the or a side wall of the filter body base comprises the filter outlet of the filter apparatus, the filter outlet is preferably in direct liquid communication with the drain holes in the second end face of the filter cartridge that allow liquid to leave the filter cartridge volume. Preferably that communication is via a gap between the filter cartridge and at least one side wall of the filter body base. The side wall of one or both of the filter cartridge and filter body base may be configured to create one or more areas where the gap between the side walls of the filter cartridge and filter body base is wider than in other areas. This will create one or more channels through which liquid such as the filtered water exiting the filter cartridge can more easily flow than where the gap is narrower. The one or more channels are preferably located so as to direct the flow of the water exiting the filter cartridge to the filter outlet.

In preferred embodiments of the present invention the side wall of the filter cartridge is configured to define a channel extending from the intersection of the side wall of the filter cartridge with the second end wall of the filter cartridge to a discharge zone. The discharge zone is adjacent to the filter outlet when the filter cartridge is located within the filter body base and correctly orientated therein and the filter body lid is engaged with the filter body base.

In such preferred embodiments, it is most preferred that the channel in the side wall of the filter cartridge is sufficiently deep that when the conduit engagement means of the filter outlet extends into the volume defined by the filter body base and filter body lid the filter cartridge does not interfere with the conduit engagement means of the filter outlet either when the filter cartridge is in position in the filter body base or when it is being placed within or taken out of the filter body base.

The filter cartridge volume defined by the filter cartridge is adapted to contain filter media. The filter media may be of a homogenous nature throughout the filter cartridge volume.

Alternatively, the filter media within the filter cartridge volume may be non-homogenous. In such embodiments the filter media may be all of the same media but of different sizes or may be comprised of two or more different media. The filter media may be chosen to best suit the oil water mixture that the filter apparatus is intended to treat.

In embodiments where the filter media within the filter cartridge volume is non-homogenous, the filter cartridge volume may be filled with filter media so that the filter media is sufficiently tightly packed that the filter media may not move within the filter cartridge. The filter media may be layered within the filter cartridge so that liquid passing through the filter cartridge volume from the filter cartridge inlet to the filter cartridge outlet encounters a number of layers of filter media.

Alternatively, one or more layers of mesh or fabric may be employed to keep the filter media in the desired position within the filter cartridge. The mesh or fabric may also be employed to prevent the filter media exiting the cartridge volume via the holes in the first and second end walls of the filter cartridge or of blocking those holes.

It is known that some materials that are used as filter media for water oil mixtures have optimal functionality when they are fully and permanently submerged in liquid whilst other materials have optimal functionality when they are not submerged in liquid. When both such filter media are to be employed in a filter apparatus according to the present invention, the filling of the filter cartridge with filter media may be performed with reference to the location of the filter outlet in a side wall of the filter base. This is because the further the filter outlet is from the base of the filter body base the greater the amount of water that will be retained in the filter body base, and hence the greater the amount of the filter media within the filter cartridge that will be fully and permanently submerged once the filter apparatus of the present invention is in use. The distance of the filter outlet from the base of the filter body base can be chosen to suit the configuration of the filter media within the filter cartridge if so desired.

The filter apparatus of the present invention may further comprise one or more mounting means suitable for retaining the filter apparatus in a fixed position relative to a surface on which it is mounted. In one preferred embodiment, the mounting means is comprised of a mounting plate which may be fixed to a substantially vertical mounting surface and a mounting plate engagement means attached to or incorporated in the filter body base. Preferably the mounting plate and the mounting plate engagement means are so configured that the mounting plate can be attached to the mounting surface so that it can be brought into engagement with the mounting plate engagement means only by vertical movement of the filter apparatus downwards relative to the mounting plate, and out of engagement with the mounting plate engagement means by vertical movement of the filter apparatus upwards relative to the mounting plate.

In another preferred embodiment, the mounting means is comprised of a mounting cup which may be fixed to a mounting surface. The cup is configured to allow a lower (when the filter apparatus is orientated for use) portion of a filter apparatus of the present invention to be located in the volume within the cup. Preferably the fit of the lower portion of a filter apparatus within the cup is not loose, preferably the fit is snug so that there is contact between a substantial portion of the inside face of the cup and the filter apparatus, that contact giving rise to a frictional grip on the filter apparatus by the mounting cup.

Preferably the mounting cup is so dimensioned and configured that a sufficient portion of the filter apparatus may be inserted in the cup that the filter apparatus cannot be knocked over whilst in the cup. Preferably the mounting cup is so configured that when the cup is attached to a suitable mounting surface and the lower portion of a filter apparatus is within the cup, the filter apparatus is orientated for use. The mounting cup may comprise a number of means allowing it to be fixed to a number of different mounting surfaces, for example the cup may include screw holes allowing the cup to be fixed to a horizontal or vertical mounting surface.

It is further preferred that the mounting cup is so configured that when the lower portion of a filter apparatus is located within the cup, the only movement possible for the filter apparatus is removal of the filter out of the mounting cup.

It is preferred that the filter apparatus further comprises on its outer surface a mounting position for at least one time in service indicator. The mounting of a time in service indicator can be used to ensure that he filter cartridge can be changed on a regular basis or to ensure that he filter is not used beyond a certain period of time. In either instance, the use of a time in service indication can help ensure that the filter is operating at maximum or at least acceptable levels of efficiency. This will help prevent unintended discharge of water that is not sufficiently free from oil from the filter apparatus into the environment.

The filter body base and the filter body lid of the filter apparatus according to the present invention may define any volume. Preferred volumes are between 0.002 and 0.050 m³, between 0.002 and 0.040 m³, between 0.002 and 0.030 m³, between 0.002 and 0.020 m³, between 0.002 and 0.010 m³, between 0.002 and 0.008 m³, between 0.002 and 0.006 m³, around 0.005 m³, around 0.010 m³, around 0.015 m³, and around 0.020 m³.

According to a second aspect of the present invention there is provided a filter cartridge as described above adapted for use in connection with the filter apparatus of the first aspect of the present invention.

According to a third aspect of the present invention there is provided a service kit for use in association with the filter apparatus of the first aspect of the present invention comprising a filter cartridge according the second aspect of the present invention. The service kit of the third aspect of the present invention may further comprise one or more of a new life in service indicator, a transportation bag in which a used filter cartridge may be placed and sealing means for that bag, gloves to wear while changing the filter cartridge and, if appropriate a new seal means for creating a seal between the filter body base and the filter body lid.

According to a fourth aspect of the present invention there is provided at least one compressed air system and a filter apparatus according to the first aspect of the present invention. The compressed air system of the fourth aspect of the present invention is preferably supplied with a filter apparatus according to the first aspect of the present invention. This is beneficial because it allows the supplier of the apparatus of the compressed air apparatus to ensure that the filter apparatus according to the first aspect of the present invention is correctly sized for the quantity of condensate expected to be generated by the compressed air system. Furthermore, it can be ensured that the filter media within the filter cartridge is appropriate for the expected condensate.

Compressed air systems are known and may comprise one or more of the following elements: a compressor, a dryer, a line filter, a water separator, a cooler, and an air receiver tank. It will be appreciated that this list of components is not exhaustive and a compressed air system comprising one or more alternative elements together with a filter apparatus according to the present invention falls within the scope of the present invention.

According to a fifth aspect of the present invention there is provided a method of treatment of a water oil mixture using a filter apparatus according to the first aspect of the present invention. In preferred embodiments of the method of treatment the water oil mixture to be treated is a condensate from one or more compressed air apparatus.

According to a sixth aspect of the present invention there is provided an improved filter cartridge comprising a number of walls collectively defining a cartridge volume suitable for containing a filter media, a filter cartridge inlet, a filter cartridge outlet, and at least one vent, in which the filter cartridge inlet comprises at least one aperture through which an air / water / oil mixture may enter the filter cartridge volume, and the inlet is at least partially surrounded by a labyrinthine material which extends at least a portion of the distance between the filter cartridge inlet and the or each vent.

A labyrinthine material is one in which fluid may pass through the material but will need to travel a labyrinthine or non-linear path as it passes through that material. A preferred labyrinthine material is reticulated foam. Other labyrinthine materials fall within the scope of the present invention.

Preferably the cartridge inlet extends into a void defined wholly or in part by the labyrinthine material. Preferably the labyrinthine material is so configured that any fluid exiting the filter cartridge inlet passes directly into the labyrinthine material.

In some preferred embodiments the filter further comprises a barrier or sheet of impermeable material which extends from the filter cartridge inlet or the wall in which the filter cartridge inlet is located towards the or each vent. The barrier or sheet of impermeable material is preferably spaced from the wall or walls of the cartridge and a labyrinthine material is located between the barrier or sheet of impermeable material and the wall or walls of the cartridge.

Preferably, the barrier or sheet of impermeable material extends from a portion of the filter cartridge inlet or the filter cartridge wall adjacent the filter cartridge inlet at a position between the or each aperture of the filter cartridge inlet and the wall of the filter cartridge through which the filter cartridge inlet passes. Preferably, the sheet of impermeable material is in a substantially gas tight contact with the filter cartridge inlet or a wall of the cartridge.

The barrier or sheet of impermeable material is preferably made of plastics but other impermeable materials fall within the scope of the present invention. The sheet of impermeable material may be attached to the cartridge inlet or first end wall of the cartridge. The attachment may be made using a suitable adhesive.

The advantage of these embodiments of the present invention is that the pressurised air / water / oil mix entering the filter cartridge volume has to pass through the labyrinthine material for the air to exit the cartridge via the vent or vents in the filter cartridge. The passage of the air / water / oil mix through the labyrinthine material will lead to any water and / or oil entrained in the air impacting on the structure of the labyrinthine material and becoming dis-entrained with the result that the air exiting the filter cartridge is free or acceptably free from entrained water and / or oil. This is particularly so in the embodiments including the sheet of impermeable material because the minimum thickness of labyrinthine material that the air / water / oil mix has to pass through before a vent is reached is higher when the sheet of impermeable material is present than when it is not.

A preferred embodiment of a filter cartridge according to this aspect of the present invention is substantially as described in connection with the first aspect of the present invention but with the inclusion of the elements of this sixth aspect as described above.

The present invention will be further described and explained by way of example with reference to the accompanying drawings in which
Figure 1 shows an embodiment of a filter apparatus according to the first aspect of the present invention;
Figure 2 shows a sectional view of the filter apparatus of Figure 1;
Figure 3 shows a detail of the filter inlet and the cartridge inlet of the filter apparatus of Figure 1;
Figure 4 shows a plan view of the first end wall of the filter cartridge of the filter apparatus of Figure 1;
Figure 5 shows a plan view of the second end wall of the filter cartridge of the filter apparatus of Figure 1 viewed through the cartridge volume;
Figure 6 shows a sectional view of the filter cartridge and the filter body base of the filter apparatus of Figure 1 when that apparatus is in use; and
Figure 7 shows an embodiment of a filter cartridge according to the sixth aspect of the present invention

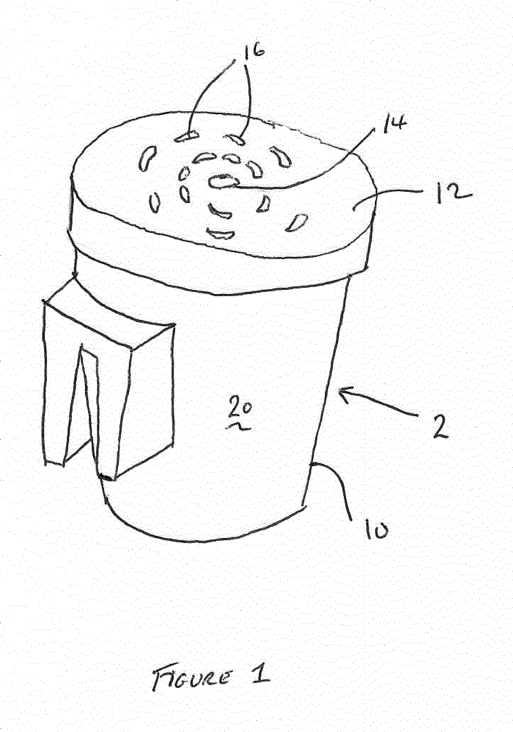

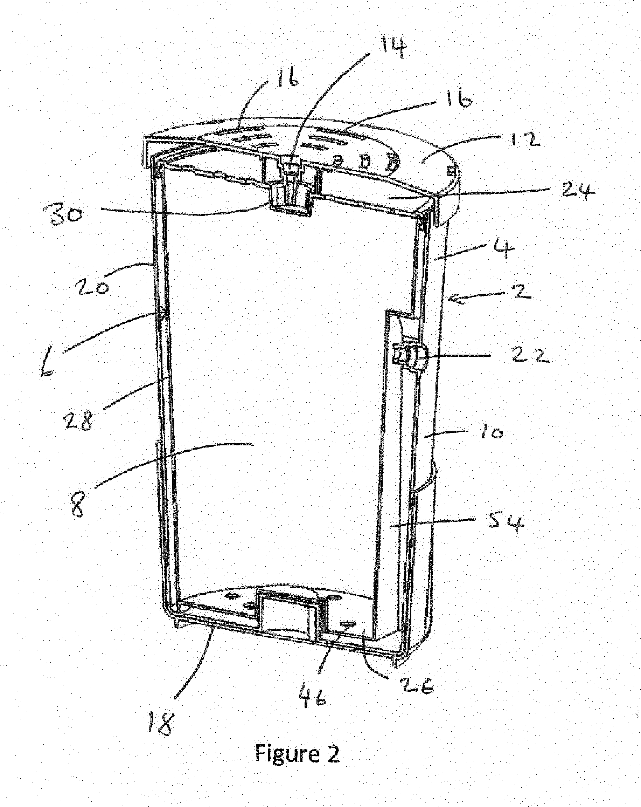

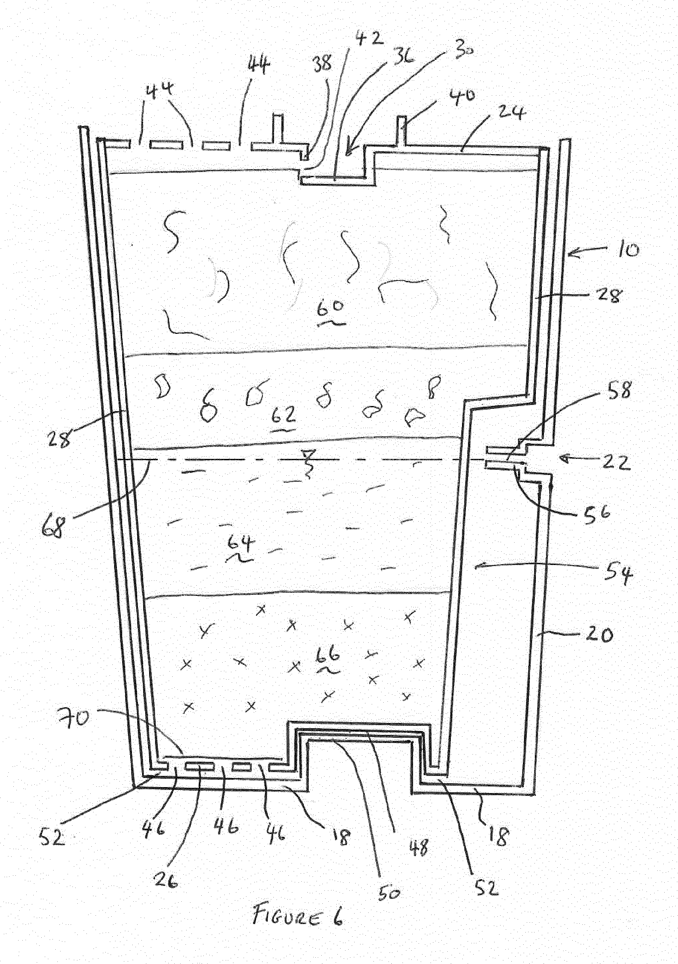

With reference to Figures 1 and 2, a filter apparatus (2) is comprised of a filter body (4) within which is located a filter cartridge (6). The filter cartridge (6) defines a cartridge volume (8) which, when in use, is wholly or partially filled with a filter media (shown in Figure 6). The filter body (4) is comprised of a filter body base (10) and a filter body lid (12). The filter body lid (12) is substantially circular and adapted to be screwed onto the filter body base (10) via a screw thread (not shown).

The filter body lid (12) is comprised of a filter inlet (14) and a plurality of vent holes (16) passing through the filter body lid (12). The filter inlet (14) is approximately at the geometrical centre of the filter body lid (12). The filter body base (10) is comprised of a base (18) and a curved side wall (20). The base (18) is substantially circular, and the curved side wall (20) is an inverted truncated cone. The side wall (20) comprises a filter outlet (22).

The filter cartridge (6) is comprised of a first end wall (24), a second end wall (26) and a curved side wall (28). The first and second end walls (24, 26) are substantially circular and the curved side wall (28) is an inverted truncated cone. The dimensions of the filter cartridge (6) are such that it is a loose fit within the filter body base (10). Located at the approximate geometrical centre of the first end wall (24) is a cartridge inlet (30).

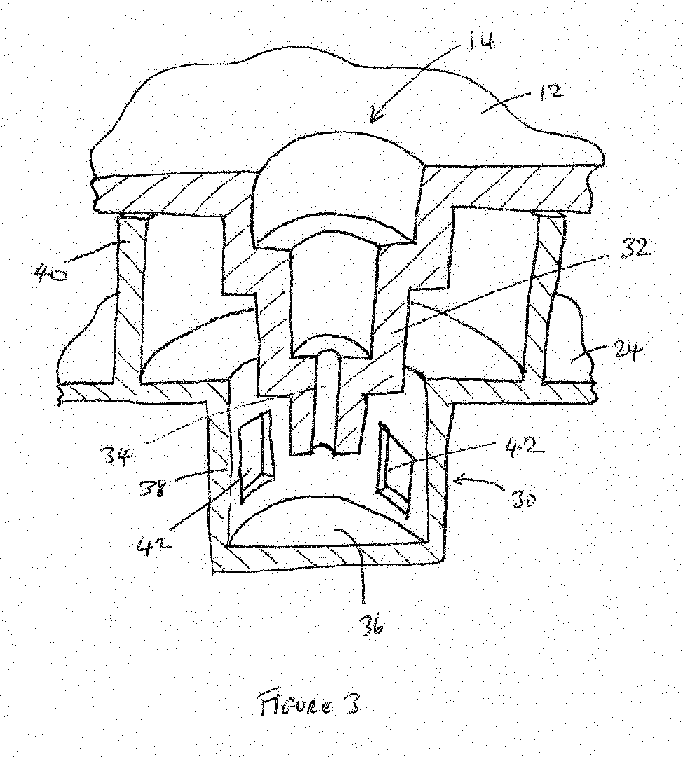

With reference to Figure 3, the result of the filter body lid (12) having the filter inlet (14) approximately at its geometric centre and the first end wall (24) of the filter cartridge (6) having the cartridge inlet (30) approximately at its geometric centre is that when the filter cartridge (6) is within the filter body base (10) and the filter body lid (12) is engaged with the filter body base (10), the filter inlet (14) and cartridge inlet (30) are adjacent to each other.

The filter inlet (14) is comprised of a conduit engagement means (32) which defines a filter inlet passage (34). In the illustrated embodiment shown in Figure 3, the conduit engagement means (32) is the female part of a male female coupling system. The male part of the coupling system (not shown) is attached to the end of a conduit (not shown) and inserted into the conduit engagement means (32). This allows, when the filter apparatus (2) is in use, condensate (not shown) to travel from a source for such condensate, for example an air compressor, to the filter apparatus (2) via the conduit.

The cartridge inlet (30) is comprised of an inlet recess in the first end wall (24) of filter cartridge (6) defined by a deflection plate (36) and a side wall (38), and a cup wall (40). The inlet recess in the first end wall (24) extends into the cartridge volume (8) and is in fluid communication with the cartridge volume (8) via cartridge inlet passages (42). The cup wall (40) extends from the surface of the first end wall (24) distant from the cartridge volume (8) towards the filter body lid (12) when that lid is engaged with the filter body base (10). The height of the cup wall (40) is such that when the filter body lid (12) is fully engaged with the filter body base (10) the top of the cup wall (40) is touching the face of the filter body lid (12) facing the filter cartridge (6). The top of the cup wall (40) may be provided with a compressible seal means (not shown) to ensure a fluid or liquid tight seal between the cup wall (40) and the filter body lid (12).

The deflection plate (36), the side wall (38), the portion of the first end wall (24) between the inlet recess in the first end wall (24) and the cup wall (40), the cup wall (40), and the filter body lid (12) collectively define the cartridge inlet volume.

When the filter apparatus (2) is in use it is orientated so that the filter inlet (14) is substantially vertically above the cartridge inlet (30). When the condensate enters the cartridge inlet volume via the filter inlet passage (34) it may be flowing as a liquid at atmospheric pressure or it may be a pressurised liquid, or gas and liquid mix. If the condensate is liquid and at atmospheric pressure it will flow out of the mouth of filter inlet passage (34) and fall onto the deflection plate (36). The liquid will then flow out of the inlet recess in the first end wall (24) into the cartridge volume (8) via the cartridge inlet passages (42).

If the condensate is a pressurised liquid or gas and liquid mix, then the condensate will impact on the deflection plate (36) and splash around within the cartridge inlet volume. The pressure will not increase in the cartridge inlet volume for any significant period of time because pressurised gas or liquid will exit the cartridge inlet volume via the cartridge inlet passages (42). The splashing around of the condensate within the cartridge inlet volume will, however, cause the condensate to loose kinetic energy and pressure. The purpose of the cup wall (40) is to create a large enough cartridge inlet volume to allow the condensate to splash around or flow around in a turbulent fashion and to dissipate energy. Optionally, the cartridge inlet volume may include one or more baffle walls (not shown) that will further cause the condensate to loose energy.

It will be appreciated that although the cup wall (40) is shown as being a substantially circular wall in Figures 2 and 3, in other embodiments the cup wall (40) may be of other configurations.

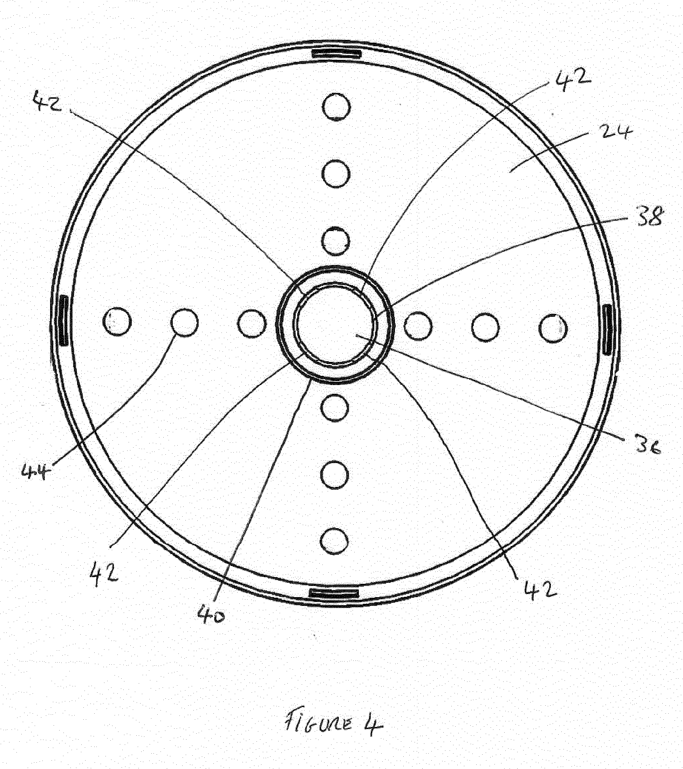

With reference to Figure 4, the first end wall (24) of the filter cartridge (6) includes a number of vent holes (44), for clarity, only one vent hole (44) is labelled. The vent holes (44) are arranged along four radial lines across the surface of first end wall (24), with three vent holes (44) along each line. The radial lines are approximately equally spaced from each other with around 90° between each line. It may be seen that each of the cartridge inlet passages (42) are so located that they approximately bisect the angles between the adjacent lines of vent holes (44). This has the effect that condensate exiting the cartridge inlet volume via the cartridge inlet passages (42) is not travelling towards any of the vent holes (44).

The filter body base (10) / filter body lid (12) and the filter cartridge (6) are dimensioned so that there is a void between the filter body lid (12) and first end wall (24) of the filter cartridge (6) as may be seen in Figure 2. That void is filled with reticulated foam (not shown). This has the effect that passage of any gas out of any of the vent holes (44) to any of the vent holes (16) is via a labyrinthine path. The result of such a path having to be followed is that if the gas is carrying aerosolized liquid, it is likely that the aerosol will impact on the structure of the foam and condense. As a result gas exiting vent holes (16) will be substantially free of aerosolized liquid. A further advantage is that any liquid splash out of vent holes (44) will be captured by the reticulated foam. The foam is made of a material that is neither absorbent or adsorbent and, as such, any liquid that is deposited in or captured by the foam will drain down to the surface of the filter body lid (12) and may then run into the cartridge volume (8) via the vent holes (44).

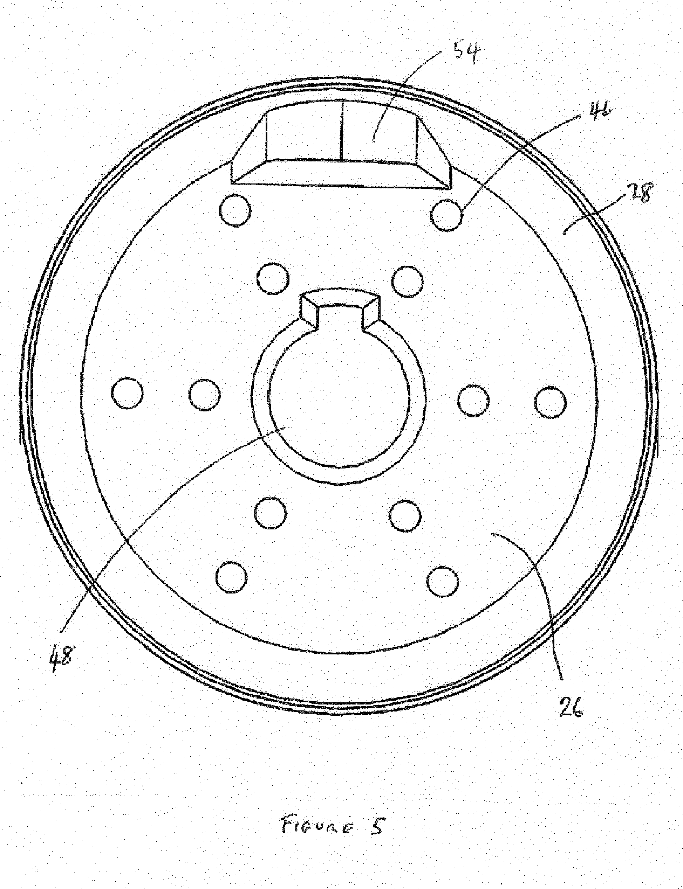

The second end wall (26) of the filter cartridge (6) is provided with a cartridge outlet in the form of a number of drain holes (46). The drain holes (46) are distributed across the second end wall (26) along six radial lines. This has the effect that no part of the base of cartridge volume (8) adjacent the second end wall (26) is very distant from a drain hole (46). As a result, liquid will flow through substantially all of the filter media (not shown in Figure 5) and there will be no stagnant zones within the filter media. In known filters there is provided only one water drainage location from the filter media which has the result that the parts of the filter media which are at the same level as the water drainage location but laterally distant from the water drainage location there is no water flow. This is inefficient and reduces the overall capacity of the filter.

With reference to Figures 5 and 6, the second end wall (26) of filter cartridge (6) further comprises a recess (48). The recess (48) is in the face of the second end wall (26) of the filter cartridge (6) facing the base (18) of the filter body base (10) and projects into the cartridge volume (8). In the plane of the second end wall (26) the recess is substantially circular with a slot extending radially from the edge of the circle. The base (18) of the filter body base (10) is provided with a similarly shaped projection (50) that is dimensioned to project into the recess (48) when the filter cartridge (6) has a particular predetermined orientation relative to the filter body base (10). The height of the projection (50) and the depth of the recess (48) are such that when the projection (50) is within the recess (48) the filter body lid (12) can be fully engaged with the filter body base (10). When the projection (50) is not within the recess (48), for example because the filter cartridge (6) is wrongly orientated relative to the filter body base (10), or because the filter cartridge (6) is not intended to be used in the filter apparatus (2) of the present invention, the filter body lid (12) cannot be fully engaged with the filter body base (10).

The height of the projection (50) and the depth of the recess (48) are also such that when the projection (50) is within the recess (48) and the base of the recess (48) is resting on the top of the projection (50) there is a gap (52) between the second end wall (26) of the filter cartridge (6) and the base (18) of the filter body base (10). The gap (52) is of sufficient size to allow water exiting the filter cartridge (6) via the drain holes (46) to flow between the second end wall (26) of the filter cartridge (6) and the base (18) of the filter body base (10).

The side wall (28) of the filter cartridge (6) comprises an elongate recess (54) that is positioned so that when the projection (50) is within the recess (48), the elongate recess (54) extends from adjacent the gap (52) between the second end wall (26) of the filter cartridge (6) and the base (18) of the filter body base (10) and an area adjacent the filter outlet (22). This recess aids the flow of water from the drain holes (46) in the second end wall (26) of the filter cartridge (6) to the filter outlet (22).

The filter outlet (22) is comprised of a conduit engagement means (56) which defines a filter outlet passage (58). In the illustrated embodiment shown in Figure 6, the conduit engagement means (56) is the female part of a male female coupling system. The male part of the coupling system (not shown) is attached to the end of a conduit (not shown) and inserted into the conduit engagement means (56). This allows, when the filter apparatus (2) is in use, water to leave the filter apparatus (2) and flow, via the conduit, to an appropriate location for disposal or storage.

The elongate recess (54) is sufficiently deep that the conduit engagement means (56) does not interfere with or touch the side wall (28) of the filter cartridge (6) when the filter cartridge is in the correct position within the filter body base (10) (as illustrated in Figure 6), or when the filter cartridge (6) is moved into or out of the correct position within the filter body base (10) (as illustrated in Figure 6).

The cartridge volume (8) of the filter cartridge (6) is, when the filter apparatus (2) is in use or ready for use, substantially filled with filter media. In the filter cartridge (6) illustrated in Figure 6, the filter cartridge (6) is adapted to be used in the orientation shown in Figure 6. The filter media in the filter cartridge (6) is in four layers (60, 62, 64, and 66). The filter media in each of layers (60, 62, 64, and 66) are different and, in combination, are efficient at filtering the oil out of the condensate introduced into the filter cartridge (6) via the cartridge inlet (30). The top two layers (60 and 62) are above the liquid line (68) which is approximately the level that the liquid (water and oil mix inside the filter cartridge (6) and water between the filter cartridge (6) and the filter body base (10)) sits at when the filter is in use. The filter media in the top two layers (60 and 62) are chosen for being suitable for use when not fully or constantly submerged. The filter media in the lower two layers (64 and 66) are chosen for being suitable for use when fully or constantly submerged.

There is a mesh (70) located between the filter media of the bottom layer of filter media (66) and the second end wall (26) of the filter cartridge (6). This stops the filter media of the layer (66) exiting the filter cartridge (6) via the drain holes (46) or blocking those holes.

The filter cartridge (6) filled with filter media may be supplied separately from the filter apparatus (2) so that when a filter cartridge (6) has reached the end of its useful life, a fresh filter cartridge (6) may be used to replace the used cartridge.

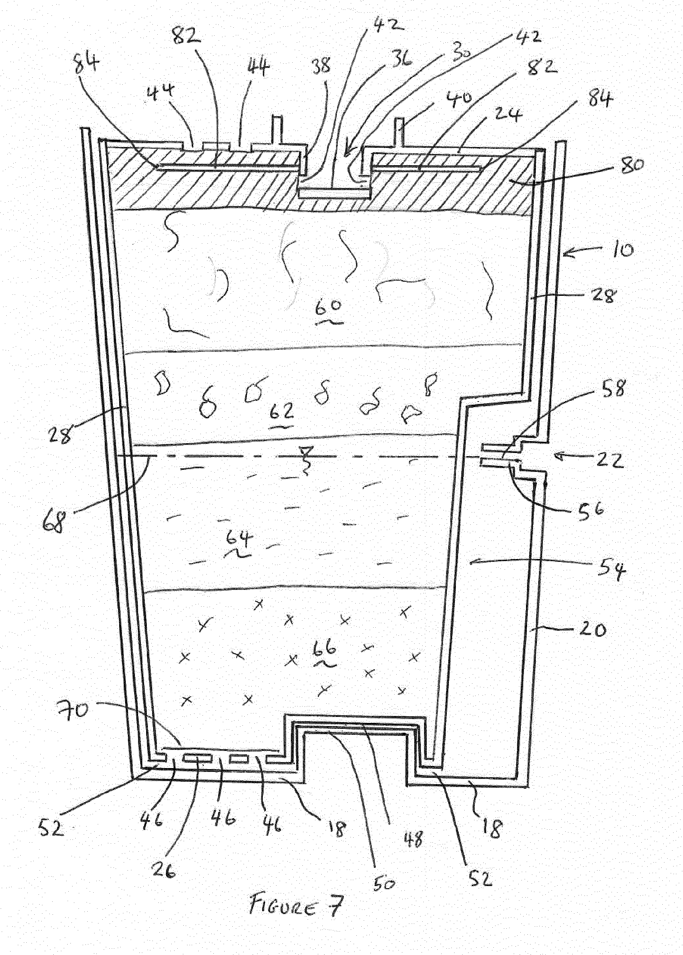

With reference to Figure 7, there is illustrated a filter cartridge that is similar to that illustrated in Figure 6 but further comprising a labyrinthine material in the form of a reticulated foam (80) and an impermeable barrier or sheet (82). The reticulated foam (80) defines a void into which the cartridge inlet (30) projects. The mouth of each cartridge inlet passage (42) of the cartridge inlet (30) into the cartridge volume (8) is overlain by the reticulated foam (80).

Attached to the cartridge inlet (30) at a position between the mouths of the cartridge inlet passages (42) and the first end wall (24) is the impermeable barrier (82). The impermeable barrier (82) is attached using an adhesive (not shown. Alternatively, the attachment can be a friction fit or simply located around the cartridge inlet (30) with a close correspondence of dimensions between the adjacent surfaces of the cartridge inlet (30) and the impermeable barrier (82).

The presence of the impermeable barrier (82) has the effect that air, water and / or oil mix exiting the mouth of a cartridge inlet passage (42) has to travel through the reticulated foam (80) to the outer edge (84) of the impermeable barrier (82) and then back to a vent (44) in the first end wall (24) before that air can exit the cartridge volume (8). This length of travel through the reticulated foam (80) makes it unlikely that there is any water or oil entrained in the air by the time that air exits the filter volume (8) via a vent (44). The water and oil that is deposited on the structure of the reticulated foam (80) will flow down through the structure of the reticulated foam (80) and enter the filter media (60) under the influence of gravity.

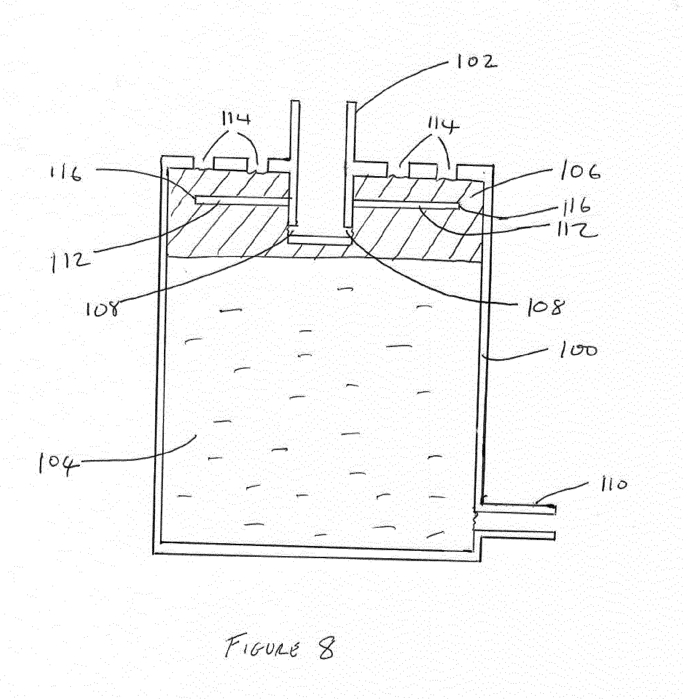

It will be appreciated that the filter cartridge according to the sixth embodiment of the present invention may, as is illustrated in Figure 7, be used as part of a larger filer apparatus. Alternatively, the filter cartridge may be used as a standalone filter as illustrated in Figure 8.

Figure 8 shows a filter cartridge (100) with an inlet (102) adapted to engage with a conduit (not shown) for the supply of a mixture of one or more of air, water and or oil into the filter cartridge (100) and an outlet (110) adapted to engage with a conduit (not shown) for the removal of filtered water from the filter cartridge (100). The inlet (102) extends into the volume defined by the filter cartridge (100). Within the volume defined by the filter cartridge (100) is filter media (104) and a labyrinthine material in the form of a reticulated foam (106).

The inlet (102) extends into a void defined by the reticulated foam (106) and is provided with a number of inlet mouths (108) into the volume defined by the filter cartridge (100). Each inlet mouth (108) is overlain by the reticulated foam (106).

Attached to the inlet (102) at a position between the inlet mouths (108) and the wall of the filter cartridge (100) through which the inlet (102) passes is an impermeable sheet (112). The impermeable sheet (112) is attached to the inlet (102) in a known fashion, for example by an adhesive. The wall of the filter cartridge (100) through which the inlet (102) passes is provided with a number of vents (114) through which air entering the filter cartridge (100) may exit. The impermeable sheet (112) has the effect that air exiting the inlet mouths (108) has to travel through the reticulated foam (106) to the outer edge (116) of the impermeable sheet (112) and then back to a vent (114). This length of travel through the reticulated foam (106) makes it unlikely that there is any water or oil entrained in the air by the time that air exits the filter cartridge via a vent (114). The water and oil that is deposited on the structure of the reticulated foam (106) will flow down through the structure of the reticulated foam (106) and enter the filter media (104) under the influence of gravity.

### Statements of Invention

1 A filter apparatus comprising a filter body within which is located a filter cartridge, the filter body comprising a filter inlet and a filter outlet, the filter cartridge defines a cartridge volume suitable for containing a filter media and comprises a cartridge inlet and a cartridge outlet, in which the filter inlet is in fluid communication with the cartridge inlet, the cartridge inlet is in fluid communication with the cartridge outlet via the cartridge volume, and the cartridge outlet is in fluid communication with the filter outlet characterised in that
   the filter inlet comprises a conduit engagement means, and a filter inlet passage along which fluid may pass,
   the cartridge inlet comprises a deflector plate and at least one cartridge inlet passage,
   the filter inlet and cartridge inlet in combination define a cartridge inlet volume located at least partially between the mouth of the filter inlet passage remote from the conduit engagement means and the deflector plate,
   the filter inlet passage is so configured that fluid exiting the mouth of the filter inlet passage into the cartridge inlet volume has a direction of travel toward the deflector plate, and
   the or each cartridge inlet passage extends between the cartridge inlet volume and the cartridge volume.
2 A filter apparatus according to statement 1 in which the filter cartridge is comprised of first and second end walls and at least one side wall extending between the first and second end walls, the first and second end walls and the or all of the side walls combine to define the cartridge volume.
3 A filter apparatus according to statement 2 in which one or more of the first and second end walls and the or each side wall are not formed of a flexible material.
4 A filter apparatus according to statement 2 or 3 in which the first end wall of the filter cartridge comprises the cartridge inlet and at least one vent hole passing through the first end wall.
5 A filter apparatus according to statement 4 in which there are a plurality of vent holes passing through the first end wall of the filter cartridge, the vent holes are grouped into at least two groups, and each group of vent holes is arranged along a line across the surface of the first end wall.
6 A filter apparatus according to statement 5 in which the line along which at least one group of vent holes is arranged extends from a location near the cartridge inlet to a location near the intersection of the first end wall and a side wall of the filter cartridge.
7 A filter apparatus according to any of statement 2 to 6 in which the cartridge inlet is located substantially at or near the geometric centre of the first end wall of the filter cartridge.
8 A filter apparatus according to any of statement 2 to 7 in which the first end wall of the filter cartridge is substantially circular, the first end wall is provided with a plurality of vent holes, the vent holes are grouped into a plurality of groups, the vent holes of each group are arranged along a straight line, each straight line of vent holes is orientated to extend substantially radially from adjacent the cartridge inlet to adjacent the intersection of the first wall and a side wall of the filter cartridge, and the straight lines of vent holes are substantially evenly spaced from each other.
9 A filter apparatus according to any of statement 4 to 8 in which the or each cartridge inlet passage is so orientated that fluid passing out of the cartridge inlet passage into the cartridge volume has a direction of travel not directly towards the or any vent hole passing through the first end wall of the filter cartridge.
10 A filter apparatus according to any of statement 1 to 9 in which the cartridge inlet is provided with at least two cartridge inlet passages.
11 A filter apparatus according to statement 10 in which the at least two inlet passages are located and orientated so that the direction of travel of fluid passing out of the cartridge inlet passage into the cartridge volume for each inlet passage are, in a plane parallel to the first end wall, substantially evenly spaced from each other.
12 A filter cartridge comprising a number of walls collectively defining a cartridge volume suitable for containing a filter media, a filter cartridge inlet, a filter cartridge outlet, and at least one vent, in which the filter cartridge inlet comprises at least one aperture through which an air / water / oil mixture may enter the filter cartridge volume, and the inlet is at least partially surrounded by a labyrinthine material which extends at least a portion of the distance between the filter cartridge inlet and the or each vent.
13 A filter cartridge according to statement 12 in which the labyrinthine material is so configured that air / water / oil mixture exiting the aperture in the filter cartridge inlet passes into the labyrinthine material.
14 A filter cartridge according to statement 12 or 13 in which the filter cartridge further comprises a barrier of impermeable material which extends from the filter cartridge inlet or the wall in which the filter cartridge inlet is located towards the or each vent.
15 A filter cartridge according to statement 14 in which the barrier of impermeable material extends from a portion of the filter cartridge inlet or the filter cartridge wall adjacent the filter cartridge inlet at a position between the or each aperture of the filter cartridge inlet and the wall of the filter cartridge through which the filter cartridge inlet passes.
16 A filter cartridge according to statement 14 or 15 in which the barrier of impermeable material is at least partially surrounded by the labyrinthine material.
17 A filter apparatus according to any of statement 1 to 11 comprising a filter cartridge according to any of statement 12 to 16.
18 A filter apparatus according to any of statement 1 to 11 or 17 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body is configured and dimensioned to allow a filter cartridge to be readily placed into and taken out of the filter body, and the filter body base and filter body lid are configured so that they may be releasably engaged with each other only when the filter body lid and filter body base are orientated or positioned relative to each other in a predetermined orientation or position.
19 A filter apparatus according to any of statement 1 to 11, 17 or 18 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body is configured and dimensioned to allow a filter cartridge to be readily placed into and taken out of the filter body, characterised in that the filter body base, filter body lid and the filter cartridge are so dimensioned and configured that, when the filter cartridge is placed within the filter body base, the filter cartridge has to be in a specific position and orientation relative to the filter body base and filter body lid before the filter body lid may be engaged with the filter body base.
20 A filter apparatus according to any of statement 1 to 11 or 17 to 19 in which the filter body is comprised of a filter body base and a filter body lid in which the filter body base is a vessel comprising a base, one or more side walls and an open mouth remote from the base, the filter body lid further comprises the filter inlet and the filter body base further comprises the filter outlet, and the filter body lid is provided with at least one vent hole passing through the filter body lid.
21 A filter apparatus according to statement 20 in which the or each vent hole in the filter body lid is located in a position that is not adjacent to a vent hole in the first end wall of the filter cartridge when the filter body lid is engaged with the filter body base and the filter cartridge is within the filter body.
22 A filter apparatus according to any of statement 2 to 11 or 17 to 21 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body is configured and dimensioned to allow a filter cartridge to be readily placed into and taken out of the filter body, the filter body base, filter body lid and the filter cartridge are so dimensioned and configured that when the filter cartridge is located within the filter body base and the filter body lid is engaged with the filter body base, there is a void between the first end wall of the filter cartridge and the filter body lid, and the void is reversibly filled with a labyrinthine material.
23 A filter apparatus according to statement 22 in which the labyrinthine material is reticulated foam.
24 A filter apparatus according to any of statement 1 to 11 or 17 to 23 in which the filter cartridge is comprised of first and second end walls and at least one side wall extending between the first and second end walls, the first and second end walls and the or all of the side walls combine to define the cartridge volume, and the cartridge outlet comprises one or more drain holes in the second end wall.
25 A filter apparatus according to statement 24 in which there are a plurality of drain holes in the second end wall of the filter cartridge and those drain holes are substantially evenly spaced across the second end wall.
26 A filter apparatus according to statement 24 in which there are a plurality of drain holes in the second end wall of the filter cartridge which are spaced from each other with an uneven spacing.
27 A filter apparatus according to any of statement 1 to 11 or 17 to 26 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body is configured and dimensioned to allow a filter cartridge to be readily placed into and taken out of the filter body, the filter cartridge is comprised of first and second end walls and at least one side wall extending between the first and second end walls, the first and second end walls and the or all of the side walls combine to define the cartridge volume, the or each of the base of the filter body base and the second end wall of the filter cartridge are so configured that they interact with each other and that interaction causes the filter cartridge to be located at a predetermined location and or orientation relative to the filter body base.
28 A filter apparatus according to statement 27 in which the interaction between the filter body base and the filter cartridge may include one or more male / female elements integral with the base of the filter body base and the second end wall of the filter cartridge or the second end wall of the filter cartridge and the base of the filter body base respectively.
29 A filter apparatus according to any of statement 1 to 11 or 17 to 26 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body is configured and dimensioned to allow a filter cartridge to be readily placed into and taken out of the filter body, the filter cartridge is comprised of first and second end walls and at least one side wall extending between the first and second end walls, the first and second end walls and the or all of the side walls combine to define the cartridge volume, the base of the filter body base comprises at least one projection where the or each projection projects from the base of the filter body base into the volume defined by the filter body base and filter body lid, and the second end wall of the filter cartridge further comprises recesses corresponding in number, location and shape to the projections so that each projection may loosely fit within a corresponding recess.
30 A filter apparatus according to any of statement 1 to 11 or 17 to 26 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body is configured and dimensioned to allow a filter cartridge to be readily placed into and taken out of the filter body, the filter cartridge is comprised of first and second end walls and at least one side wall extending between the first and second end walls, the first and second end walls and the or all of the side walls combine to define the cartridge volume, the or a side wall of the filter body base comprises at least one projection where the or each projection projects from the side wall of the filter body base into the volume defined by the filter body base and filter body lid, and the or a side wall of the filter cartridge further comprises recesses corresponding in number, location and shape to the projections so that each projection may loosely fit within a corresponding recess.
31 A filter apparatus according to any of statement 1 to 11 or 17 to 26 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body is configured and dimensioned to allow a filter cartridge to be readily placed into and taken out of the filter body, the filter cartridge is comprised of first and second end walls and at least one side wall extending between the first and second end walls, the first and second end walls and the or all of the side walls combine to define the cartridge volume, the filter body lid comprises at least one projection where the or each projection projects from the filter body lid into the volume defined by the filter body base and filter body lid, and the first end wall of the filter cartridge further comprises recesses corresponding in number, location and shape to the projections so that each projection may loosely fit within a corresponding recess.
32 A filter apparatus according to any of statement 1 to 11 or 17 to 31 in which the filter body is comprised of a filter body base and a filter body lid in which the filter body base is a vessel comprising a base, one or more side walls and an open mouth remote from the base, and the filter body lid is adapted to reversibly close the mouth of the filter body base, the filter body base comprises the filter outlet, and the filter outlet is spaced from the base of the filter body base.
33 A filter apparatus according to statement 32 in which the filter outlet comprises a filter outlet passage extending from the volume defined by the filter body base and filter body lid to the face of the side wall remote from that volume, and a conduit engagement means.
34 A filter apparatus according to statement 33 in which the conduit engagement means is the female part of a male / female connection system and that the conduit engagement means extends into the volume defined by the filter body base and filter body lid.
35 A filter apparatus according to statement 34 in which the filter cartridge is comprised of a first and second end wall and at least one side wall, at least one side wall of the filter cartridge is adjacent a side wall of the filter body base and the first end wall of the filter cartridge is closer to the filter body lid than the second end wall when the filter cartridge is within the filter body, and the at least one side wall of the filter cartridge is configured to define a channel extending from the intersection of the side wall of the filter cartridge with the second end wall of the filter cartridge to a discharge zone in which the discharge zone is adjacent to the filter outlet when the filter cartridge is within the filter body and the filter body lid is engaged with the filter body base.
36 A filter apparatus according to statement 35 in which the channel in the side wall of the filter cartridge is sufficiently deep that the filter cartridge does not interfere with the conduit engagement means of the filter outlet either when the filter cartridge is in position within the filter body base or when it is being placed within or taken out of the filter body base.
37 A filter apparatus according to any of statement 1 to 11 or 17 to 36 in which the filter apparatus is further provided with a mounting means suitable for retaining the filter apparatus in a fixed position relative to a surface on which it is mounted.
38 A filter apparatus according to statement 37 in which the mounting means is comprised of a mounting cup which is adapted to be fixed to a mounting surface, the cup is configured to allow a portion of a filter apparatus to be located in the volume within the cup, and there is a friction grip on the filter apparatus by the mounting cup.
39 A filter apparatus according to statement 38 in which the mounting cup is so configured that when a filter apparatus is located within the cup, the only movement possible for the filter apparatus is removal of the filter out of the mounting cup.
40 A filter apparatus according to any of statement 1 to 11 or 17 to 39 in which the filter apparatus further comprises on its outer surface a mounting position for at least one time in service indicator.
41 A filter apparatus according to any of statement 1 to 11 or 17 to 40 in which the filter cartridge is at least substantially filled with a filter media.
42 A filter apparatus according to any of statement 1 to 11 or 17 to 41 in which the filter cartridge is at least substantially filled with a filter media and the filter media is comprised of at least two types or grades of filter media.
43 A filter apparatus according to any of statement 1 to 11 or 17 to 42 in which the filter cartridge is at least substantially filled with a filter media, the filter media is comprised of at least two types or grades of filter media, and the at least two types or grades of filter media are in layers within the filter cartridge.
44 A filter apparatus according to statement 42 or 43 in which at least one type or grades of filter media has optimal filtering effect when submerged and at least one type or grades of filter media has optimal filtering effect when not submerged.
45 A filter cartridge for use in connection with a filter apparatus according to any of statement 1 to 11 or 17 to 44.
46 A service kit comprising a filter cartridge for use in connection with a filter apparatus according to any of statement 1 to 11 or 17 to 44.
47 A service kit according to statement 46 further comprising one or more of a life in service indicator, a transportation bag, protective gloves, a new seal means for creating a seal between the filter body base and the filter body lid.
48 A compressed air system comprising a filter apparatus according to any of statement 1 to 44 and one or more of a compressor, a dryer, a line filter, a water separator, a cooler, and an air receiver tank.
49 A method of treatment of a water oil mixture using a filter apparatus according to any of statement 1 to 44.
50 A method of treatment of a water oil mixture according to statement 49 in which the water oil mixture is a condensate from one or more compressed air apparatus.

## Claims

1. A filter apparatus (2) comprising a filter body (4) within which is located a filter cartridge (6), the filter body (4) comprising a filter inlet (14) and a filter outlet (22), the filter cartridge (6) is comprised of first and second end walls (24, 26) and at least one side wall (28) extending between the first and second end walls (24, 26), the first and second end walls (24, 26) and the or all of the side walls (28) combine to define the cartridge volume (8) suitable for containing a filter media (60, 62, 64, 66) and comprises a cartridge inlet (30) and a cartridge outlet (46), in which
the filter inlet (14) is in fluid communication with the cartridge inlet (30), the cartridge inlet (30) is in fluid communication with the cartridge outlet (46) via the cartridge volume (8), and the cartridge outlet (46) is in fluid communication with the filter outlet (22) **characterised in that**
the filter inlet (14) comprises a conduit engagement means (32), and a filter inlet passage (34) along which fluid may pass,
the cartridge inlet (30) comprises a deflector plate (36) and at least one cartridge inlet passage (42),
the filter inlet (14) and cartridge inlet (30) in combination define a cartridge inlet volume located at least partially between the mouth of the filter inlet passage (34) remote from the conduit engagement means (32) and the deflector plate (36),
the filter inlet passage (34) is so configured that fluid exiting the mouth of the filter inlet passage (34) into the cartridge inlet volume has a direction of travel toward the deflector plate (36), and
the or each cartridge inlet passage (34) extends between the cartridge inlet volume and the cartridge volume (8).

2. A filter apparatus (2) according to claim 1 in which the first end wall of the filter cartridge (24) comprises the cartridge inlet (30) and at least one vent hole (44) passing through the first end wall and the or each cartridge inlet passage is so orientated that fluid passing out of the cartridge inlet passage into the cartridge volume (8) has a direction of travel not directly towards the or any vent hole passing through the first end wall of the filter cartridge.

3. A filter apparatus (2) according to claim 1 or 2 in which the filter body (4) is comprised of a filter body base (10) and a filter body lid (12) in which the filter body base is a vessel comprising a base (18), one or more side walls (20) and an open mouth remote from the base, and the filter body lid is adapted to reversibly close the mouth of the filter body base, the filter body is configured and dimensioned to allow a filter cartridge (6) to be readily placed into and taken out of the filter body, **characterised in that**
the filter body base and filter body lid are configured so that they may be releasably engaged with each other only when the filter body lid and filter body base are orientated or positioned relative to each other in a predetermined orientation or position; and / or
the filter body base, filter body lid and the filter cartridge are so dimensioned and configured that, when the filter cartridge is placed within the filter body base, the filter cartridge has to be in a specific position and orientation relative to the filter body base and filter body lid before the filter body lid may be engaged with the filter body base; and / or
the filter body lid further comprises the filter inlet (14) and the filter body base further comprises the filter outlet (22), and the filter body lid is provided with at least one vent hole (16) passing through the filter body lid; and / or
the filter body base, filter body lid and the filter cartridge are so dimensioned and configured that when the filter cartridge is located within the filter body base and the filter body lid is engaged with the filter body base, there is a void between the first end wall of the filter cartridge and the filter body lid, and the void is reversibly filled with a labyrinthine material; and / or
the cartridge outlet comprises one or more drain holes (46) in the second end wall; and / or
the or each of the base of the filter body base and the second end wall of the filter cartridge are so configured that they interact with each other and that interaction causes the filter cartridge to be located at a predetermined location and or orientation relative to the filter body base; and / or
the base of the filter body base comprises at least one projection (50) where the or each projection projects from the base of the filter body base into the volume defined by the filter body base and filter body lid, and the second end wall of the filter cartridge further comprises recesses (48) corresponding in number, location and shape to the projections so that each projection may loosely fit within a corresponding recess; and / or
the or a side wall of the filter body base comprises at least one projection(22) where the or each projection projects from the side wall of the filter body base into the volume defined by the filter body base and filter body lid, and the or a side wall of the filter cartridge further comprises recesses (54) corresponding in number, location and shape to the projections so that each projection may loosely fit within a corresponding recess; and / or
the filter body lid comprises at least one projection where the or each projection projects from the filter body lid into the volume defined by the filter body base and filter body lid, and the first end wall of the filter cartridge further comprises recesses corresponding in number, location and shape to the projections so that each projection may loosely fit within a corresponding recess; and / or
the filter body base comprises the filter outlet, and the filter outlet is spaced from the base of the filter body base.

4. A filter apparatus (2) according to claim 3 **characterised in that** when the filter cartridge (6) is within the filter body (4) at least one side wall (28) of the filter cartridge is adjacent a side wall (20) of the filter body base (10), the first end wall (24) of the filter cartridge is closer to the filter body lid (12) than the second end wall (26), and the at least one side wall of the filter cartridge is configured to define a channel (54) extending from the intersection of the side wall of the filter cartridge with the second end wall of the filter cartridge to a discharge zone in which the discharge zone is adjacent to the filter outlet (22) when the filter cartridge is within the filter body and the filter body lid is engaged with the filter body base.

5. A filter apparatus (2) according to claim 4 in which the channel (54) in the side wall (28) of the filter cartridge (6) is sufficiently deep that the filter cartridge does not interfere with the conduit engagement means (56) of the filter outlet either when the filter cartridge is in position within the filter body base or when it is being placed within or taken out of the filter body base.

6. A filter apparatus (2) according to any of claims 1 to 5 in which the filter cartridge (6) is at least substantially filled with a filter media (60, 62, 64, 66).

7. A filter apparatus (2) according to any of claims 1 to 6 in which the filter cartridge (6) is at least substantially filled with a filter media (60, 62, 64, 66) and the filter media is comprised of at least two types or grades of filter media; and / or
the filter cartridge is at least substantially filled with a filter media, the filter media is comprised of at least two types or grades of filter media, and the at least two types or grades of filter media are in layers within the filter cartridge; and / or
filter media is comprised of at least two types or grades of filter media and at least one type or grade of filter media has optimal filtering effect when submerged and at least one type or grades of filter media has optimal filtering effect when not submerged.

8. A filter cartridge (6) for use in connection with a filter apparatus according to any of claims 1 to 7.

9. A filter cartridge (6) according to claim 8 comprising a number of walls collectively defining a cartridge volume (8) suitable for containing a filter media (60, 62, 64, 66), a cartridge inlet (30), a cartridge outlet (46), and at least one vent (44), in which the filter cartridge inlet comprises at least one aperture (42) through which an air / water / oil mixture may enter the filter cartridge volume, and the inlet is at least partially surrounded by a labyrinthine material (80) which extends at least a portion of the distance between the filter cartridge inlet and the or each vent and the labyrinthine material is so configured that air / water / oil mixture exiting the aperture in the filter cartridge inlet passes into the labyrinthine material.

10. A filter cartridge (6) according to claim 9 in which the filter cartridge further comprises a barrier of impermeable material (82) which extends from the cartridge inlet (30), or a portion of the wall (24) in which the cartridge inlet is located between the cartridge inlet and the or each vent (44), towards the or each vent and / or away from the wall in which the cartridge inlet is located.

11. A service kit comprising a filter cartridge for use in connection with a filter apparatus according to any of claims 1 to 7.

12. A service kit according to claim 11 further comprising one or more of a life in service indicator, a transportation bag, protective gloves, and a seal means for creating a seal between the filter body base and the filter body lid.

13. A compressed air system comprising a filter apparatus according to any of claims 1 to 7 and one or more of a compressor, a dryer, a line filter, a water separator, a cooler, and an air receiver tank.

14. A method of treatment of a water oil mixture using a filter apparatus and / or a filter according to any of claims 1 to 10.

15. A method of treatment of a water oil mixture according to claim 14 in which the water oil mixture is a condensate from one or more compressed air apparatus.
